# EUROPÄISCHE PATENTSCHRIFT

(11) **EP 1 429 283 B1**
(45) Veröffentlichungstag und Bekanntmachung des Hinweises auf die Patenterteilung: **07.11.2007**
(21) Anmeldenummer: 03028151.3
(22) Anmeldetag: 08.12.2003
(51) Int. Cl.: G06K 19/077

(54) **Tragbarer Datenträger**
Portable data carrier
Support de données portatif

(30) Priorität: 12.12.2002 DE 10258158; 23.09.2003 DE 10344049
(43) Veröffentlichungstag der Anmeldung: 16.06.2004
(60) Teilanmeldung: 06008084.3
(73) Patentinhaber: Giesecke & Devrient GmbH, 81677 München (DE)
(72) Erfinder: Linke, Andreas, Prof. Dr., 83623 Dietramszell (DE)
(74) Vertreter: Dendorfer, Claus

(56) Entgegenhaltungen:
- EP-A- 0 409 241
- WO-A-00/16255
- WO-A-00/73988
- WO-A-01/96990
- WO-A-03/027946
- DE-A- 19 737 565
- DE-U- 29 819 389
- US-A- 3 702 464

## Beschreibung

Die Erfindung betrifft tragbare Datenträger, insbesondere in Gestalt von Chipkarten oder Token, und die darauf vorgesehenen Schnittstellen zum Datenaustausch. Noch spezieller befaßt sich die Erfindung mit der physischen Ausgestaltung solcher Schnittstellen.

Chipkarten, die auch als *Smart Cards* oder *Memory Cards* bezeichnet werden, sind in vielfältigen Ausgestaltungen bekannt. Generell weisen Chipkarten einen dünnen Kartenkörper auf, in dem sich mindestens ein Halbleiterchip befindet. Hinsichtlich ihrer Abmessungen entsprechen Chipkarten üblicherweise den Vorgaben der Norm ISO 7810. Die hier insbesondere betrachteten kontaktgebundenen Chipkarten sind ferner in der Regel gemäß der Norm ISO/IEC 7816 ausgestaltet. Teil 1 dieser Norm definiert die physischen Eigenschaften der Chipkarte; Teil 2 gibt die Anordnung und Ausgestaltung der Kontaktanordnung auf der Chipkarte an, und Teil 3 definiert elektrische Eigenschaften und Übertragungsprotokolle. Die genannte Normen sind über die *International Organization for Standardization,* Genf, *http:llwww.iso.ch,* erhältlich.

Zum Datenaustausch mit Chipkarten sind besondere Schnittstellenvorrichtungen erforderlich, die - abhängig davon, ob sie Bedienungs- und Anzeigeelemente aufweisen oder nicht - üblicherweise als "Terminals" oder "Kartenleser" bezeichnet werden. Die Verwendung solcher Schnittstellenvorrichtungen verursacht jedoch zusätzliche Kosten. Außerdem kann die Chipkarte nur an Geräte angeschlossen werden, die eine geeignete Schnittstellenvorrichtung aufweisen. Dies beschränkt den gegenwärtig üblichen Einsatz von Chipkarten auf einige klar umrissene Anwendungsgebiete.

Aus den internationalen Patentveröffentlichungen WO 00/16255 A1 und WO 01/69881 A2 sind Chipkarten bekannt, die zwei Schnittstellen aufweisen, nämlich eine erste Schnittstelle gemäß der Norm ISO/IEC 7816 und eine zweite Schnittstelle gemäß der USB-Norm. Unter der Bezeichnung "USB" wird im vorliegenden Dokument der *Universal Serial Bus* (Universeller Serieller Bus) verstanden, wie er in dem Dokument "*Universal Serial Bus Specification*" des USB Implementors Forum, Inc., Revision 2.0, 27. April 2000, verfügbar unter *http:*//*www.usb.org*/*developers*/*docs.html*, beschrieben ist.

Die in den Dokumenten WO 00/16255 A1 und WO 01/69881 A2 beschriebenen Chipkarten sind jedoch lediglich in ihren elektrischen Eigenschaften und hinsichtlich der verwendeten Protokolle mit dem *Universal Serial Bus* kompatibel. Zur Übertragung der USB-Datensignale werden die bislang noch freien Kontaktflächen C4 und C8 der Kontaktanordnung gemäß ISO/IEC 7816 verwendet. Es ist daher ein spezieller Adapter erforderlich, in den die Chipkarte eingesteckt wird und der die genannten Kontaktflächen mit einem USB-Stecker verbindet. Wenngleich ein solcher Adapter weniger aufwendig als ein üblicher Kartenleser ist, so verursacht er dennoch zusätzliche Kosten. Ferner muß der Adapter ständig mitgeführt werden. Dadurch leidet die Benutzerfreundlichkeit, weil der Adapter erstens größer als die Chipkarte ist und weil er zweitens möglicherweise gerade dann nicht greifbar ist, wenn er dringend benötigt wird.

Aus der WO 03/027946 A1 ist ein in Chipkartentechnik hergestellter USB-Token ("Dongle") bekannt, der nach Art einer SIM-Karte aus einer Standardträgerkarte herausbrechbar ist. Um den Token auf eine an USB-Buchsen angepaßte Stärke zu bringen werden geeignete Maßnahmen vorgeschlagen. U.a. soll im Bereich des Kontaktfeldes auf der Token-Unterseite eine Einlage in Form einer zusätzlichen Materialschicht aufgebracht werden oder sollen im Bereich des Kontaktfeldes die Kartenflanken umgebogen werden. Der vorgeschlagene Token eignet sich bestimmungsgemäß für USB-Anwendungen, ist aber für übliche Chipkartenanwendungen nicht mehr ohne weiteres einsetzbar.

Aus der WO 01/93990 A2 ist weiter ein persönlicher digitaler Schlüssel für USB-Anschlüsse bekannt, der auf einem Chipkartenprozessor basiert. Um eine Kommunikation mit einem geräteseitigen USB-Controller zu ermöglichen, besitzt der Schlüssel eine in Hardware ausgeführten Emulator, der einen Chipkartenleser simuliert und die USB-Kommandos in ein auf den Chipkartenprozessor abgestimmtes Protokoll umsetzt. Der digitale Schlüssel ist nicht für übliche Chipkarteneinsätze vorgesehen.

Aus der DE 197 37 565 A1 ist ein Chipmodul bekannt, welches auf einer Zunge angeordnet ist, die über Führungsschienen wechselbar in einen Kartenkörper eingeschoben werden kann. Über auf den Führungsschienen angeordnete Kontakte werden die Chipmodule mit im Kartenkörper befindlichen Bauelementen verbunden. Die Lösung stellt hohe Anforderungen an die Fertigungstechnik insbesondere des Kartenkörpers.

Aus der DE 298 19 389 U1 ist eine Chipkarte bekannt, die gleichzeitig zwei Kartenformate abdeckt. In einer Standardchipkarte ist hierzu eine kleinere zweite Chipkarte ausgebildet, die zunächst über ein Scharnier mit dem Kartenkörper verbunden ist. Durch Verbiegen des Scharniers kann die kleinere Karte aus der größeren getrennt werden. Zur Herstellung einer Karte mit einem integrierten Schaltkreis mit zwei Schnittstellen ist die Lösung nicht geeignet.

Die Erfindung hat daher die Aufgabe, die genannten Probleme ganz oder zum Teil zu lösen und einen tragbaren Datenträger insbesondere in Gestalt einer Chipkarte bereitzustellen, der besonders einfach an externe Geräte anschließbar ist. Insbesondere soll zum Anschluß der Chipkarte an einen Computer oder an ein anderes externes Gerät weder eine Schnittstellenvorrichtung noch ein Adapter erforderlich sein. In bevorzugten Ausgestaltungen soll die Chipkarte unmittelbar - also insbesondere ohne Adapter oder Zwischenstecker - in eine USB-Buchse eines Computers, eines USB-Hubs oder eines USB-Verlängerungskabels einsteckbar sein. Die vorzuschlagende Chipkarte soll zudem ohne wesentliche Änderungen in Ausführung und Herstellungsverfahren als Token ausführbar sein.

Diese Aufgabe wird gelöst durch einen tragbaren Datenträger in Gestalt einer Chipkarte mit einer ersten und einer zweiten Schnittstelle, wobei die zweite Schnittstelle Schnittstellenkontakte nutzt, welche auf einer aus dem tragbaren Datenträger herausgebildeten Kontaktzunge der Chipkarte angeordnet sind. Erfindungsgemäß ist die Kontaktzunge reversibel aus der Chipkartenebene herausbiegbar oder herausklappbar und wieder in die Chipkartenebene zurückbiegbar oder zurückklappbar. Die Kontaktzunge kann dabei insbesondere einstückig mit der restlichen Chipkarte aus einem flexiblen Kunststoffmaterial gebildet sein. Bei einer klappbaren Kontaktzunge kann ein Scharnier und/oder mindestens eine Schnapphalterung, die die Kontaktzunge in ihrer Lage in der Chipkartenebene fixiert, vorgesehen sein. Die abhängigen Ansprüche definieren bevorzugte Ausgestaltungen der Erfindung.

Ist der tragbare Datenträger eine Chipkarte, können die Maße der Kontaktzunge weitgehend unabhängig von den für Chipkarten durch die einschlägigen Normen vorgegebenen Abmessungen so gewählt werden, daß die Kontaktzunge wie ein Stecker unmittelbar in eine externe Buchse, an die die Chipkarte angeschlossen werden soll, paßt. In bevorzugten Ausgestaltungen ist diese externe Buchse eine Flachbuchse, welche die Kontaktzunge zumindest seitlich umschließt. Insbesondere kann die Buchse eine USB-Buchse vom Typ "A" sein. Die Breite einer zum Einstecken in eine solche Buchse ausgelegten Kontaktzunge beträgt ungefähr 12 mm. Dies ist schmaler als die Breiten der drei gebräuchlichen, durch die Norm ISO 7810 definierten Chipkartenformate ID-1, ID-00 und ID-000.

In bevorzugter Ausführung einer Chipkarte stellt die erste Schnittstelle eine "übliche" Chipkartenschnittstelle dar, die kontaktgebunden oder kontaktlos ausgestaltet sein kann. Bevorzugt ist die erste Schnittstelle eine kontaktgebundene Schnittstelle gemäß ISO/IEC 7816 mit einer Kontaktanordnung, die insgesamt sechs oder acht Schnittstellenkontakte aufweist. Es kann auch Anmeldung vorgesehen sein, daß die physische Kontaktanordnung der ersten Schnittstelle der Norm ISO/IEC 7816 zwar nicht genau entspricht, aber mit dieser kompatibel ist. Hierunter ist zu verstehen, daß die Kontaktanordnung gegenüber der Norm zusätzliche oder fehlende Kontaktfelder aufweisen kann, wenn nur die benötigten Kontaktfelder an den erforderlichen Stellen vorhanden sind. Die Kontaktanordnung der ersten Schnittstelle befindet sich in manchen Ausgestaltungen der Erfindung - ebenso wie die Kontakte der zweiten Schnittstelle - auf der Kontaktzunge.

Die erste und die zweite Schnittstelle nutzen vorzugsweise zumindest teilweise unterschiedliche Schnittstellenkontakte. So kann beispielsweise für die zweite Schnittstelle mindestens ein zusätzlicher Schnittstellenkontakt vorgesehen sein, also ein Schnittstellenkontakt, der für die erste Schnittstelle nicht verwendet wird. Dieser mindestens eine zusätzliche Schnittstellenkontakt der zweiten Schnittstelle ist in manchen Ausgestaltungen in die Kontaktanordnung der ersten Schnittstelle integriert oder befindet sich in unmittelbarer Nachbarschaft dieser Kontaktanordnung. In anderen Ausführungsformen sind die Kontaktanordnung der ersten Schnittstelle und der/die zusätzliche/n Schnittstellenkontakt/e dagegen auf der Oberfläche der Chipkarte räumlich voneinander getrennt.

In bevorzugten Ausgestaltungen ist die Kontaktzunge in einem inneren Bereich der Chipkarte ausgebildet, der allseitig vom Außenrand der Chipkarte getrennt ist. Beispielsweise kann die Kontaktzunge dadurch gebildet sein, daß die Chipkarte mit einem U-förmigen Schlitz versehen ist. Der von diesem Schlitz umgebene Innenbereich der Chipkarte bildet die Kontaktzunge. In alternativen Ausgestaltungen kann die Kontaktzunge auch am Rand der Chipkarte angeordnet sein. Dies beinhaltet auch Ausführungsformen, bei denen die Kontaktzunge in einem inneren Bereich der Chipkarte beginnt und am Rand des durch die Norm ISO 7810 definierten Kartenformats endet.

In einer zweckmäßigen Ausgestaltung weist die Kontaktzunge seitlich angebrachte, klappbare Stege auf, um z.B. einen USB-Stecker mit einer größeren Dicke als der Chipkartendicke nachzubilden. Da die Kontaktzunge einen dauerhaften Bestandteil der Chipkarte bildet, ist bequem eine wiederholte und abwechselnde Verwendung der ersten und der zweiten Schnittstelle möglich. Dies stellt ein weiteres Unterscheidungsmerkmal der vorliegenden Chipkarte zu den im Mobiltelefonbereich bekannten Chipkarten dar, die auf einer Trägerkarte im Format ID-1 eine irreversibel ausbrechbare, kompakte Chipkarte im Format ID-000 enthalten.

Ausführungsformen der Chipkarte, bei denen die zweite Schnittstelle eine USB-Schnittstelle ist, sind besonders geeignet zum Anschluß der Chipkarte an gegenwärtig übliche Computer. Bevorzugt sind alle aktiven Schnittstellenkontakte der Chipkarte mit mindestens einem Halbleiterchip verbunden, welcher - beispielsweise auf die in den Dokumenten WO 00/16255 A1 und WO 01/69881 A2 beschriebene Weise - die elektrischen Signale beider Schnittstellen empfängt, sendet und verarbeitet.

Ein bevorzugtes Anwendungsgebiet der Erfindung sind sogenannte Internet-Chipkarten, die einen kompakten Internet-Server implementieren. Ein auf einem externen Computer laufender Internet-Browser kommuniziert über die zweite Schnittstelle - z.B. die USB-Schnittstelle - mit dem Server und stellt eine Benutzeroberfläche zur Interaktion mit der Chipkarte bereit. Die Erfindung ist jedoch auch für viele weitere Anwendungsgebiete nützlich, so z.B. immer dann, wenn umfangreiche Daten zwischen einer Chipkarte und einem externen Gerät übertragen werden sollen.

Weitere Merkmale, Aufgaben und Vorteile der Erfindung ergeben sich aus der folgenden Beschreibung mehrerer Ausführungsbeispiele und Ausführungsalternativen der Erfindung. Es wird auf die schematischen Zeichnungen verwiesen, in denen zeigen:
Fig. 1 eine Draufsicht auf einen tragbaren Datenträger in Gestalt einer Chipkarte nach einem ersten Ausführungsbeispiel der Erfindung,
Fig. 2 eine Seitenansicht der Chipkarte von Fig. 1 mit einer herausgebogenen, in eine USB-"A"-Buchse eingesteckten Kontaktzunge,
Fig. 3 eine vergrößerte Schnittdarstellung entlang der Linie III - III in Fig. 2,
Fig. 4 eine vergrößerte Ansicht der Kontaktanordnung von Fig. 1, in die zusätzliche Schnittstellenkontakte integriert sind,
Fig. 5 eine gegenüber Fig. 4 abgewandelte Ausführungsform der Kontaktanordnung und der zusätzlichen Schnittstellenkontakte,
Fig. 6, 6A und Fig. 7 Ausführungsalternativen der in Fig. 1 gezeigten Chipkarte, und
Fig. 8, Fig. 9 und Fig. 10 je eine Draufsicht auf eine Chipkarte.

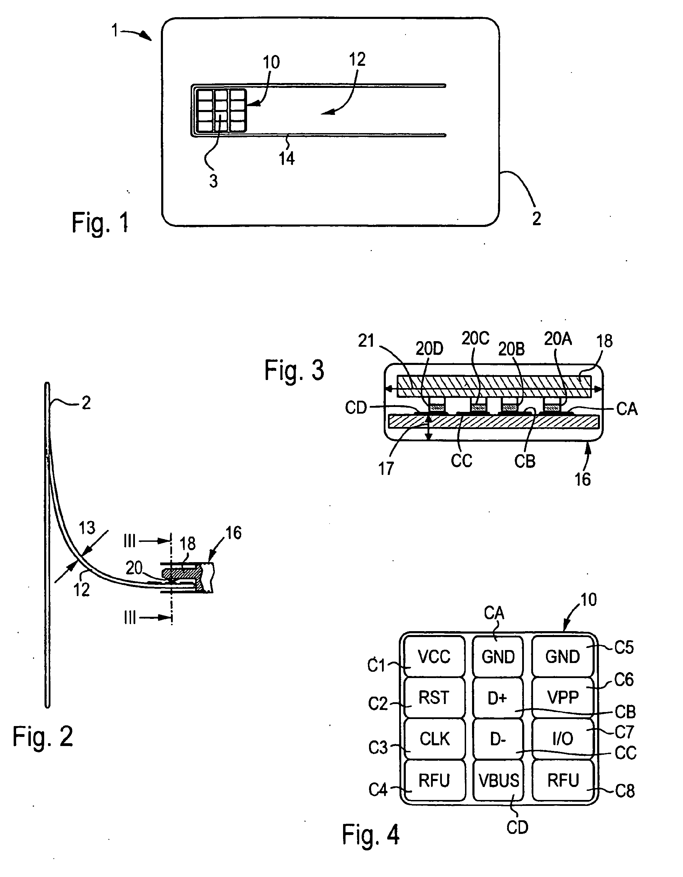

Fig. 1 zeigt einen tragbaren Datenträger 1 in Gestalt einer Chipkarte mit einem Kartenkörper 2, in den ein Modul 3 eingebettet ist, worin sich ein Halbleiterchip mit einem integrierten Schaltkreis befindet, und einer Kontaktanordnung 10. Die Chipkarte entspricht in ihren Außenabmessungen dem Format ID-1 gemäß der Norm ISO 7810. Die Chipkarte weist eine erste und eine zweite Schnittstelle zur Kommunikation mit externen Geräten auf. Hierbei ist die erste Schnittstelle eine "übliche" Chipkartenschnittstelle, die in ihren physischen und elektrischen Eigenschaften und hinsichtlich der eingesetzten Protokolle der Norm ISO/IEC 7816 entspricht. Die zweite Schnittstelle ist im vorliegenden Ausführungsbeispiel eine USB-Schnittstelle, mittels derer die Chipkarte unmittelbar an einen Computer oder ein sonstiges mit einer USB-"A"-Buchse ausgestattetes Gerät angeschlossen werden kann.

An der durch Teil 2 der Norm ISO/IEC 7816 definierten Position weist die Chipkarte eine Kontaktanordnung 10 auf, die in Fig. 4 genauer dargestellt ist. Die Kontaktanordnung 10 enthält an den ebenfalls durch Teil 2 der Norm ISO/IEC 7816 definierten Stellen insgesamt acht Schnittstellenkontakte C 1, C2, C3, C4, C5, C6, C7, C8 der ersten Schnittstelle. Ferner sind in die Kontaktanordnung 10 gemäß Fig. 1 und Fig. 4 insgesamt vier weitere Schnittstellenkontakte CA, CB, CC, CD integriert, die der zweiten Schnittstelle zugeordnet sind. Im vorliegenden Ausführungsbeispiel sind sämtliche Schnittstellenkontakte C1 - C8 und CA - CD als mit der Chipkarten-Oberfläche ungefähr bündige Kontaktflächen ausgestaltet, während in Abwandlungen insbesondere für die zusätzlichen Schnittstellenkontakte CA - CD andere Ausgestaltungen vorgesehen sein können.

Die Kontaktanordnung 10 befindet sich auf einer Kontaktzunge 12, die im vorliegenden Ausführungsbeispiel dadurch gebildet ist, daß ein dreiseitig umlaufender, U-förmiger Schlitz in das Trägermaterial der Chipkarte eingearbeitet ist. An dem in Fig. 1 rechts gezeigten Ansatzpunkt der Kontaktzunge 12 geht die Kontaktzunge 12 integral in die restliche Chipkarte über. Die Dicke 13 der Kontaktzunge 12 entspricht der normgemäßen Dicke der Chipkarte. An der in Fig. 1 links gezeigten Spitze der Kontaktzunge befindet sich die Kontaktanordnung 10. Die Breite der Kontaktzunge 12 beträgt im vorliegenden Ausführungsbeispiel ungefähr 12 mm, während die Kontaktanordnung 10 - gemäß Teil 2 der Norm ISO/IEC 7816 - vom oberen Rand des Kontaktfeldes CA zum unteren Rand des Kontaktfeldes CD eine Mindestgröße von ungefähr 9,3 mm aufweist.

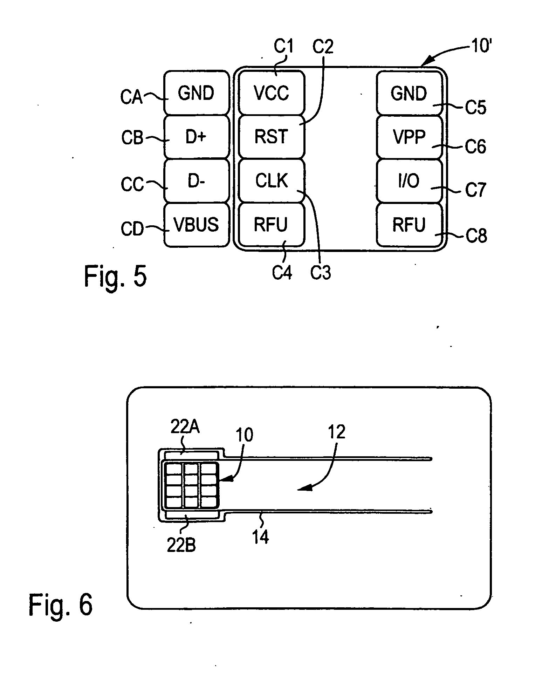

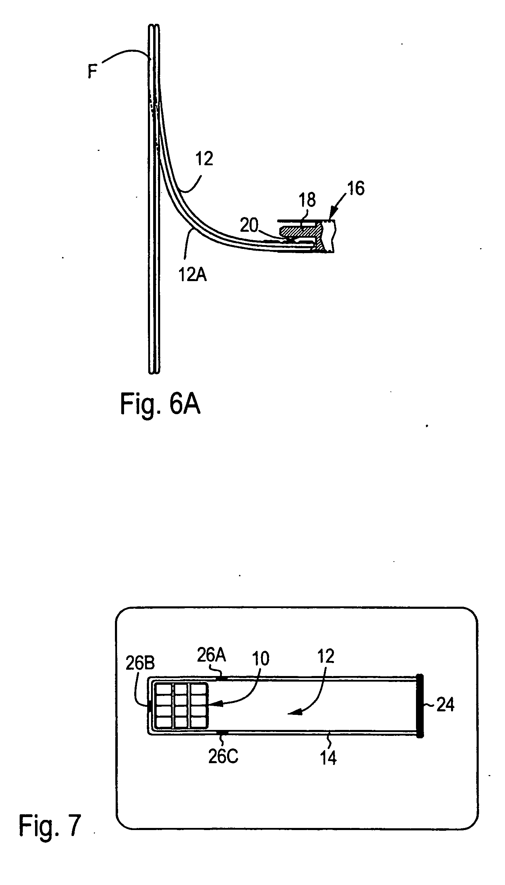

Als Material für den Kartenkörper wird im vorliegenden Ausführungsbeispiel ein flexibles Kunststoffmaterial, beispielsweise PVC, ABS oder PET, verwendet. In das Trägermaterial der Chipkarte ist in an sich bekannter Weise ein Halbleiterchip eingearbeitet, der in Fig. 1 von dem Kontaktfeld 10 verdeckt ist. Der Kartenkörper kann in Ausführungsalternativen auch besonders hochwertige Materialien wie Folienverbundwerkstoffe oder Metalle aufweisen, um eine hohe Lebensdauer zu gewährleisten. Dies gilt insbesondere für die unten noch genauer zu beschreibenden Ausführungsvarianten gemäß Fig. 6 - Fig. 10.

Bei der Ausgestaltung gemäß Fig. 1 besteht die Kontaktzunge 12 aus demselben flexiblen Material wie der restliche Kartenkörper. Daher kann die Kontaktzunge 12 ohne Beschädigung aus der durch die Chipkarte definierten Ebene herausgebogen werden, wie dies in Fig. 2 gezeigt ist. Die Kontaktzunge 12 paßt wegen ihrer Breite von ungefähr 12 mm genau in eine an sich bekannte USB-Buchse 16 vom Typ "A". In der Darstellung von Fig. 2 ist die zum Betrachter weisende Seitenwand der USB-Buchse 16 teilweise weggebrochen gezeichnet, so daß ein Kontakthalter 18 und eine Kontaktfeder 20 sichtbar sind. Wie aus Fig. 2 in Verbindung mit Fig. 4 hervorgeht, ist der Abstand der zur USB-Schnittstelle gehörenden Schnittstellenkontakte CA - CD von der Spitze der Kontaktzunge 12 so gewählt, daß die Kontaktfeder 20 der USB-Buchse 16 bei maximal eingesteckter Kontaktzunge 12 eine elektrische Verbindung mit einem dieser Schnittstellenkontakte CA - CD herstellt.

Aus dem in Fig. 3 dargestellten Querschnitt ist ersichtlich, daß im eingesteckten Zustand der Kontaktzunge 12 je eine von vier Kontaktfedern 20A, 20B, 20C, 20D der USB-Buchse 16 je einen der vier zur USB-Schnittstelle gehörenden Schnittstellenkontakte CA - CD kontaktiert. Dies trifft im vorliegenden Ausführungsbeispiel trotz der Tatsache zu, daß die Ausgestaltung der Schnittstellenkontakte CA - CD als Kontaktfelder und ihre Dimensionierung an die Norm ISO/IEC 7816 - und nicht primär an die USB-Norm - angelehnt ist. Die Kontaktfedern 20A - 20D liegen daher, wie in Fig. 3 dargestellt, nicht genau mittig auf den Kontaktflächen der Schnittstellenkontakte CA - CD auf; dies ist jedoch unschädlich. In Ausführungsalternativen ist dagegen vorgesehen, die Schnittstellenkontakte CA - CD weitgehend gemäß den Vorgaben der USB-Norm auszugestalten.

Im Betrieb kann die Chipkarte in ihrer flachen, in Fig. 1 gezeigten Konfiguration wie eine übliche ISO/IEC-7816-Chipkarte verwendet und beispielsweise in ein Kartenterminal oder einen Kartenleser eingeführt werden. Der in der Chipkarte befindliche Halbleiterchip erkennt diese erste Betriebsweise und stellt elektrisch und logisch eine ISO/IEC-7816-kompatible Schnittstelle zur Verfügung, deren Signale über die acht Schnittstellenkontakte C1 - C8 der Kontaktanordnung 10 geführt werden.

Ferner kann die Chipkarte, wie in Fig. 2 gezeigt, unmittelbar in die USB-Buchse 16 beispielsweise eines Computers oder eines anderen Geräts eingesteckt werden. Der Halbleiterchip der Chipkarte paßt sich auch diesem zweiten Betriebsmodus an, indem er eine elektrisch und logisch USB-kompatible Schnittstelle bereitstellt, deren Signale über die vier zusätzlichen Schnittstellenkontakte CA - CD laufen. Wird die Chipkarte aus der USB-Buchse 16 herausgezogen, so biegt sich die Kontaktzunge 12 durch die Elastizität des für die Chipkarte verwendeten Trägermaterials in die Chipkartenebene zurück, so daß wieder die flache Konfiguration gemäß Fig. 1 erreicht ist.

Fig. 5 zeigt eine gegenüber Fig. 4 abgewandelte Anordnung der Schnittstellenkontakte C1 - C8 und CA - CD. Die zusätzlichen Schnittstellenkontakte CA - CD der zweiten Schnittstelle - vorliegend der USB-Schnittstelle - sind hierbei nicht in die ISO/IEC-7816-kompatible Kontaktanordnung 10 integriert. Vielmehr befinden sich die zusätzlichen Schnittstellenkontakte CA - CD unmittelbar neben einer Kontaktanordnung 10', die exakt der Norm ISO/IEC 7816 entspricht und die nur die acht gemäß dieser Norm vorgesehenen Schnittstellenkontakte C1 - C8 aufweist. Die Ausgestaltung nach Fig. 5 ermöglicht es, die Schnittstellenkontakte CA - CD besonders nahe an der Spitze der Kontaktzunge 12 anzuordnen. Überdies wird vermieden, daß die Kontaktfedern 20A - 20D beim Einstecken der Kontaktzunge 12 in die USB-Buchse 16 kurzzeitig über die Schnittstellenkontakte C1 - C4 streifen.

In der Auführungsvariante gemäß Fig. 6 befinden sich seitlich an der Spitze der Kontaktzunge 12 - über und unter der Kontaktanordnung 10 - zwei klappbare Stege 22A, 22B. Diese Stege 22A, 22B gleichen den Höhenunterschied zwischen der Normdicke 13 einer Chipkarte und der definierten Höhe 17 der Einschuböffnung, d.h. des unter den Kontaktfedern 20 A - 20 D befindlichen Steckraumes, einer USB-Buchse 16 aus und sind entsprechend dimensioniert. Die Stege 22A, 22B können vor dem Einstecken der Kontaktzunge 12 in die USB-Buchse 16 im rechten Winkel umgeklappt werden, und verbessern den Halt der Kontaktzunge 12 in der USB-Buchse 16, indem sie die vertikale Bewegungsfreiheit der Kontaktzunge 12 in der USB-Buchse 16 reduzieren.

Auch die Stege 22A, 22B können nach Gebrauch wieder in eine flache Konfiguration zurückgeklappt werden, wobei sie von entsprechend verbreiterten Bereichen des Schlitzes 14 aufgenommen werden.

Fig. 6 A veranschaulicht eine Ausführungsvariante, bei der der Höhenausgleich von der Dicke 13 der Kontaktzunge 12 zu der Höhe 17 einer USB-Buchse 16 mit Hilfe einer zusätzlichen Füllkarte F erreicht wird. Die Füllkarte F entspricht in ihren Abmessungen einer Chipkarte und besitzt an derselben Position wie die Chipkarte eine biegsame Zunge 12A. Ihre Dicke ist so bemessen, daß die bei Übereinanderlegen von Füllkarte und Chipkarte resultierende Gesamtdicke genau der Höhe einer USB-Buchse 16 entspricht. An der Oberseite der Füllkarte F sind Verbindungsmittel ausgebildet, um die Füllkarte lösbar an einer Chipkarte befestigen zu können. Die Verbindung erfolgt dabei so, daß Füllkarte und Chipkarte, damit Kontaktzunge 12 und Zunge 12 A, genau übereinander liegen. Als Verbindungsmittel kommt beispielsweise eine mehrfach nutzbare Haftklebeschicht in Betracht. Weiter können die Verbindungsmittel eine Formgebung umfassen, welche die Verbindung unterstützt. Beispielsweise können auf der Füllkarte kleine Aufwölbungen angelegt sein, die in korrespondierende Mulden auf der Chipkarte greifen.

Zur Nutzung wird die, grundsätzlich separat gehandhabte Füllkarte F an der Chipkarte befestigt. Anschließend werden die danach übereinanderliegenden Zungen 12, 12A gemeinsam aus der Kartenebene herausgebogen und gemeinsam in die USB-Buchse 16 gesteckt. Aufgrund der aufeinander abgestimmten Dimensionen sitzt das Zungenpaar 12, 12A fest in der USB-Buchse.

Da ein häufiges Biegen der Kontaktzunge 12 möglicherweise der Lebensdauer der Chipkarte abträglich sein könnte, ist in der Ausführungsalternative gemäß Fig. 7 ein Scharnier 24 zur klappbaren Verbindung der Kontaktzunge 12 mit der restlichen Chipkarte vorgesehen. Die Kontaktzunge 12 - oder sogar die Gesamte Chipkarte - kann dann aus einem relativ starren Material, beispielsweise auch Metall, gefertigt sein. Das Scharnier 24 kann so ausgestaltet sein, daß die Kontaktzunge 12 mit einer gewissen Rückstellkraft in die flache Konfiguration der Chipkarte gedrängt wird. Alternativ oder zusätzlich können auch Schnapphalterungen 26A, 26B, 26C im umlaufenden Schlitz 14 vorgesehen sein, mit denen sich die Kontaktzunge 12 nach dem Rückklappen in der ursprünglichen Lage fixieren läßt.

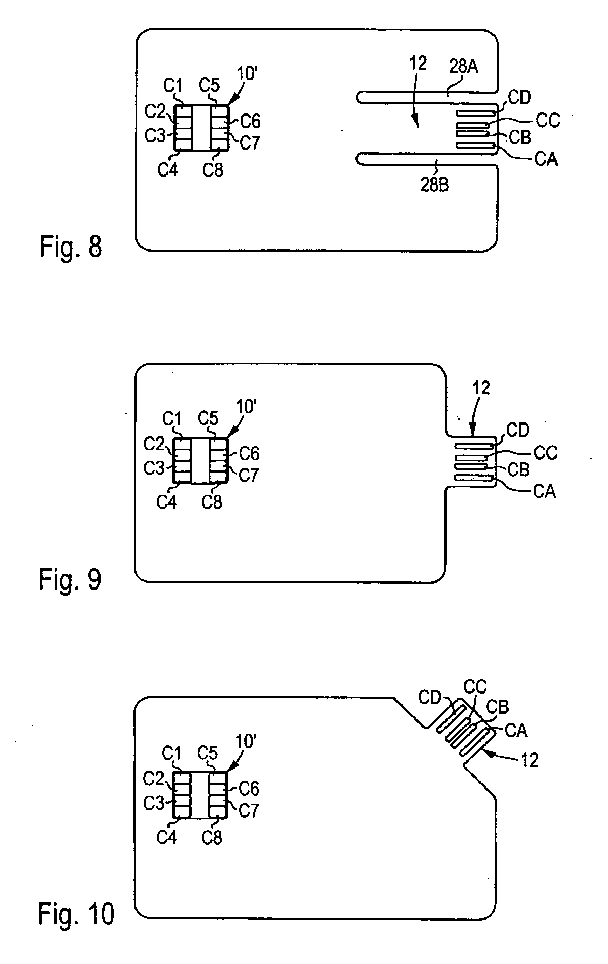

Bei den bisher beschriebenen Ausgestaltungen war die Kontaktzunge 12 in einem inneren Bereich der Chipkarte, also mit allseitigem Abstand vom äußeren Rand der Chipkarte, angeordnet. In Fig. 8, ist dagegen ein Ausführungsbeispiel gezeigt, bei dem die Kontaktzunge 12 am Rand der Chipkarte angeordnet ist. Die Kontakte C1 - C8 der ersten Schnittstelle in der Kontaktanordnung 10 sind hierbei räumlich von den Kontakten CA - CD weniger gegenseitiger Abhängigkeiten und Einschränkungen bestehen. So können beispielsweise die Schnittstellenkontakte CA - CD in Fig. 8 hinsichtlich ihrer Geometrie weitgehend oder vollständig gemäß der USB-Norm ausgestaltet sein.

Bei dem Ausführungsbeispiel gemäß Fig. 8 ist die Kontaktzunge 12 durch zwei Einschnitte 28A, 28B von der restlichen Chipkarte getrennt. Die Kontaktzunge 12 kann flexibel ausgestaltet sein, um das Einstecken in eine fest eingebaute USB-Buchse 16 zu erleichtern.

Die Einschnitte 28A, 28B können auch breiter ausgestaltet sein, im Extremfall so breit, daß die Kartenbereiche oberhalb und unterhalb der Kontaktzunge 12 ganz wegfallen. Eine derartige Ausgestaltung ist in Fig. 9 dargestellt. Die dort gezeigte Chipkarte läßt sich in nahezu jede - auch in eine in einen Computer fest eingebaute - USB-Buchse 16 einstecken. Allerdings entspricht die Chipkarte hinsichtlich ihrer Außenabmessungen nicht mehr der Norm ISO 7810, was bei einer Verwendung in Kartenlesern oder Kartenterminals möglicherweise zu Schwierigkeiten führen könnte. Um solche Probleme zu vermeiden, sind bei der Ausgestaltung gemäß Fig. 10 die durch die Norm ISO 7810 vorgegebenen Außenmaße möglichst weitgehend eingehalten.

Es versteht sich, daß die oben beschriebenen und in den Figuren gezeigten Merkmale in weiteren Ausführungsalternativen auf vielfältige Weise miteinander kombiniert werden können. So können z.B. auch die Ausgestaltungen nach Fig. 8 - Fig. 10 mit Scharnieren oder klappbaren Stegen oder Schnapphalterungen - wie in Fig. 6 und Fig. 7 gezeigt-versehen werden. Ferner ist eine räumliche Trennung der Schnittstellenkontakte der ersten und der zweiten Schnittstelle wie in Fig. 8 - Fig. 10 auch bei einer in einem inneren Bereich der Chipkarte angeordneten Kontaktzunge 12 - wie in Fig. 1 gezeigt - möglich.

## Patentansprüche

1. Tragbarer Datenträger mit einem Kartenkörper, in den ein integrierter Schaltkreis eingebettet ist, sowie mindestens einer ersten und einer zweiten Schnittstelle, wobei die zweite Schnittstelle Schnittstellenkontakte (CA - CD) nutzt, die auf einer aus dem Kartenkörper (2) herausgeformten Kontaktzunge (12) angeordnet sind, **dadurch gekennzeichnet, daß** die Kontaktzunge (12) aus der Chipkartenebene herausbiegbar oder herausklappbar und wieder in die Chipkartenebene zurückbiegbar oder zurückklappbar ist.

2. Tragbarer Datenträger nach Anspruch 1, **dadurch gekennzeichnet, daß** die zweite Schnittstelle eine USB-Schnittstelle ist.

3. Tragbarer Datenträger nach Anspruch 2, **dadurch gekennzeichnet, daß** der Kartenkörper (2) aus mehreren Schichten aufgebaut ist, wobei Höhe und Breite des Schichtaufbaus im Bereich der Kontaktzunge (12) paßgenau auf die Abmessungen des unter den Gegenkontakten (20A - 20D) befindlichen Steckraumes einer USB-Buchse (16) abgestimmt sind.

4. Tragbarer Datenträger nach Anspruch 1, **dadurch gekennzeichnet, daß** der integrierte Schaltkreis an der Unterseite eines in den Kartenkörper (2) eingesetzten Modules (3) angeordnet ist, an dessen Oberseite die Schnittstellenkontakte (CA - CD) ausgebildet sind.

5. Tragbarer Datenträger nach Anspruch 1, **dadurch gekennzeichnet, daß** in dem Modul (3) ein zweiter integrierter Schaltkreis ausgebildet ist, der mit dem ersten verbunden ist und diesem ein Taktsignal liefert.

6. Datenträger nach Anspruch 1 in Gestalt einer Chipkarte, **dadurch gekennzeichnet, daß** die erste und die zweite Schnittstelle zumindest teilweise unterschiedliche Schnittstellenkontakte (C1 - C8; CA - CD) nutzen.

7. Datenträger nach Anspruch 1 in Gestalt einer Chipkarte, **dadurch gekennzeichnet, daß** die Schnittstellenkontakte (C1 - C8) der ersten Schnittstelle eine Kontaktanordnung (10') gemäß ISO/IEC 7816 oder eine damit kompatible Kontaktanordnung (10) bilden, und daß die zweite Schnittstelle zumindest teilweise zusätzliche Schnittstellenkontakte (CA - CD) nutzt.

8. Datenträger nach Anspruch 1 in Gestalt einer Chipkarte, **dadurch gekennzeichnet, daß** die zusätzlichen Schnittstellenkontakte (CA - CD) der zweiten Schnittstelle in die Kontaktanordnung (10) der ersten Schnittstelle integriert oder der Kontaktanordnung (10') der ersten Schnittstelle benachbart angeordnet sind.

9. Datenträger nach Anspruch 1 in Gestalt einer Chipkarte, **dadurch gekennzeichnet, daß** die erste Schnittstelle eine Schnittstelle gemäß ISO/IEC 7816 ist.

10. Datenträger nach Anspruch 1 in Gestalt einer Chipkarte, **dadurch gekennzeichnet, daß** die Kontaktzunge (12) eine geringere Breite als die Chipkarte aufweist.

11. Datenträger nach Anspruch 1 in Gestalt einer Chipkarte, **dadurch gekennzeichnet, daß** die Kontaktzunge (12) einen dauerhaften Bestandteil der Chipkarte bildet.

12. Datenträger Anspruch 1 in Gestalt einer Chipkarte, **dadurch gekennzeichnet, daß** die Kontaktzunge (12) einstückig mit der restlichen Chipkarte ausgebildet ist.

13. Datenträger nach Anspruch 1 in Gestalt einer Chipkarte, **dadurch gekennzeichnet, daß** die Kontaktzunge (12) zum Einstecken in eine Flachbuchse, vorzugsweise eine USB-"A"-Buchse (16), eingerichtet ist.

14. Datenträger nach Anspruch 1 in Gestalt einer Chipkarte, **dadurch gekennzeichnet, daß** die Kontaktzunge (12) von der restlichen Chipkarte umgeben und von dieser durch einen U-förmigen Schlitz (14) getrennt ist.

15. Datenträger nach Anspruch 1 in Gestalt einer Chipkarte, **dadurch gekennzeichnet, daß** die Kontaktzunge (12) am Rand der Chipkarte angeordnet ist.

16. Datenträger nach Anspruch 1 in Gestalt einer Chipkarte, **dadurch gekennzeichnet, daß** die Kontaktzunge (12) ein Scharnier (24) und/oder mindestens eine Schnapphalterung (26A - 26C) aufweist.

17. Datenträger nach Anspruch 1 in Gestalt einer Chipkarte, **dadurch gekennzeichnet, daß** die Kontaktzunge (12) in Höhe der auf ihr befindlichen Schnittstellenkontakte (CA - CD) der zweiten Schnittstelle mindestens einen seitlich angeordneten, klappbaren Steg (22A, 22B) aufweist.

18. Füllkarte zur Verwendung zusammen mit einem Datenträger nach Anspruch 1 in Gestalt einer Chipkarte, **dadurch gekennzeichnet, daß** sie eine der Kontaktzunge (12) der Chipkarte entsprechende Zunge (12A) aufweist, die zusammen mit der Kontaktzunge (12) der Chipkarte aus der Chipkartenebene herausbiegbar oder herausklappbar und wieder in die Chipkartenebene zurückbiegbar oder zurückklappbar ist.

19. Datenträger nach Anspruch 1 in Gestalt einer Chipkarte, **dadurch gekennzeichnet, daß** die Chipkarte mindestens einen Halbleiterchip aufweist, der zum Austausch von Daten sowohl über die erste als auch über die zweite Schnittstelle eingerichtet ist.

## Claims

1. Portable data carrier with a card body in which an integrated circuit is embedded, as well as at least one first and one second interface, wherein the second interface uses interface contacts (CA - CD) which are disposed on a contact tongue (12) formed out of the card body (2), **characterised in that** the contact tongue (12) can be bent or folded out of the chip card plane and bent or folded back into the chip card plane again.

2. Portable data carrier according to Claim 1, **characterised in that** the second interface is a USB interface.

3. Portable data carrier according to Claim 2, **characterised in that** the card body (2) is composed of a plurality of layers, wherein the height and the width of the layer structure in the region of the contact tongue (12) are adapted in a fitting manner to the dimensions of the plug-in space, located below the mating contacts (20A - 20D), of a USB socket (16).

4. Portable data carrier according to Claim 1, **characterised in that** the integrated circuit is disposed on the underside of a module (3) which is inserted in the card body (2) and on the top side of which the interface contacts (CA - CD) are formed.

5. Portable data carrier according to Claim 1, **characterised in that** a second integrated circuit is formed in the module (3), the second integrated circuit being connected to the first integrated circuit and delivering a clock signal to the latter.

6. Data carrier according to Claim 1 in the form of a chip card, **characterised in that** the first and the second interface use different interface contacts (C1 - C8; CA - CD), at least in part.

7. Data carrier according to Claim 1 in the form of a chip card, **characterised in that** the interface contacts (C1 - C8) of the first interface form a contact arrangement (10') according to ISO/IEC 7816 or a contact arrangement (10) compatible therewith, and that the second interface uses additional interface contacts (CA - CD), at least in part.

8. Data carrier according to Claim 1 in the form of a chip card, **characterised in that** the additional interface contacts (CA - CD) of the second interface are integrated into the contact arrangement (10) of the first interface or are disposed adjacent to the contact arrangement (10') of the first interface.

9. Data carrier according to Claim 1 in the form of a chip card, **characterised in that** the first interface is an interface according to ISO/IEC 7816.

10. Data carrier according to Claim 1 in the form of a chip card, **characterised in that** the contact tongue (12) is of a smaller width than the chip card.

11. Data carrier according to Claim 1 in the form of a chip card, **characterised in that** the contact tongue (12) forms a permanent component part of the chip card.

12. Data carrier according to Claim 1 in the form of a chip card, **characterised in that** the contact tongue (12) is formed in one piece with the rest of the chip card.

13. Data carrier according to Claim 1 in the form of a chip card, **characterised in that** the contact tongue (12) is adapted for insertion in a flat socket, preferably a USB "A" socket (16) .

14. Data carrier according to Claim 1 in the form of a chip card, **characterised in that** the contact tongue (12) is surrounded by the rest of the chip card and separated from this by a U-shaped slot (14).

15. Data carrier according to Claim 1 in the form of a chip card, **characterised in that** the contact tongue (12) is disposed at the edge of the chip card.

16. Data carrier according to Claim 1 in the form of a chip card, **characterised in that** the contact tongue (12) comprises a hinge (24) and/or at least one snap-action holder (26A - 26C).

17. Data carrier according to Claim 1 in the form of a chip card, **characterised in that** the contact tongue (12) comprises at least one laterally disposed, folding web (22A, 22B) at the level of the interface contacts (CA - CD), disposed on the tongue, of the second interface.

18. Top-up card for use together with a data carrier according to Claim 1 in the form of a chip card, **characterised in that** it comprises a tongue (12A) which corresponds to the contact tongue (12) of the chip card and which, together with the contact tongue (12) of the chip card, can be bent or folded out of the chip card plane and bent or folded back into the chip card plane again.

19. Data carrier according to Claim 1 in the form of a chip card, **characterised in that** the chip card comprises at least one semiconductor chip which is adapted for the exchange of data both via the first and via the second interface.

## Revendications

1. Support de données portatif comprenant un corps de carte, dans lequel est inséré un circuit intégré, ainsi qu'au moins une première et une seconde interfaces, la seconde interface utilisant des contacts d'interface (CA-CD), qui sont disposés sur une lame de contact (12) formée à partir du corps de carte (2), **caractérisé en ce que** la lame de contact (12) peut être pliée vers l'extérieur ou escamotée à partir du plan de la carte à puce et peut être repliée ou rabattue à nouveau à nouveau dans le plan de la carte à puce.

2. Support de données portatif selon la revendication 1, **caractérisé en ce que** la seconde interface est une interface USB.

3. Support de données portatif selon la revendication 2, **caractérisé en ce que** le corps de carte (2) est constitué de plusieurs couches, la hauteur et la largeur de la structure de couche dans la zone de la lame de contact (12) étant adaptées de façon très précise aux dimensions de l'espace d'enfichage, se trouvant au-dessous des contre-contacts (20A-20D), d'une douille USB (16).

4. Support de données portatif selon la revendication 1, **caractérisé en ce que** le circuit intégré est disposé sur le côté inférieur des modules (3) insérés dans le corps de carte (2), sur le côté supérieur duquel les contacts d'interface (CA-CD) sont réalisés.

5. Support de données portatif selon la revendication 1, **caractérisé en ce qu'**un second circuit intégré, qui est relié au premier et lui fournit un signal de synchronisation, est réalisé dans le module (3).

6. Support de données portatif selon la revendication 1 sous la forme d'une carte à puce, **caractérisé en ce que** la première et la seconde interfaces utilisent au moins en partie différents des contacts d'interface (C1-C8 ; CA-CD).

7. Support de données portatif selon la revendication 1 sous la forme d'une carte à puce, **caractérisé en ce que** les contacts d'interface (C1-C8) de la première interface forment un agencement de contact (10') selon ISO/IEC 7816 ou un agencement de contact compatible avec celui-ci, et **en ce que** la seconde interface utilise au moins en partie des contacts d'interface (CA-CD supplémentaires.

8. Support de données portatif selon la revendication 1 sous la forme d'une carte à puce, **caractérisé en ce que** les contacts d'interface (CA-CD) supplémentaires de la seconde interface sont intégrés dans l'agencement de contact (10) de la première interface ou sont disposés à proximité de l'agencement de contact (10') de la première interface.

9. Support de données portatif selon la revendication 1 sous la forme d'une carte à puce, **caractérisé en ce que** la première interface est une interface selon ISO/IEC 7816.

10. Support de données portatif selon la revendication 1 sous la forme d'une carte à puce, **caractérisé en ce que** la lame de contact (12) présente une largeur plus faible que la carte à puce.

11. Support de données portatif selon la revendication 1 sous la forme d'une carte à puce, **caractérisé en ce que** la lame de contact (12) forme un composant permanent de la carte à puce.

12. Support de données portatif selon la revendication 1 sous la forme d'une carte à puce, **caractérisé en ce que** la lame de contact (12) est réalisée d'une seule pièce avec la carte à puce restante.

13. Support de données portatif selon la revendication 1 sous la forme d'une carte à puce, **caractérisé en ce que** la lame de contact (12) est aménagée pour l'enfichage dans une douille plate, de préférence une douille "A" USB (16).

14. Support de données portatif selon la revendication 1 sous la forme d'une carte à puce, **caractérisé en ce que** la lame de contact (12) est entourée par la carte à puce restante et est séparée de celle-ci par une fente (14) en forme de U.

15. Support de données portatif selon la revendication 1 sous la forme d'une carte à puce, **caractérisé en ce que** la lame de contact (12) est disposée sur le bord de la carte à puce.

16. Support de données portatif selon la revendication 1 sous la forme d'une carte à puce, **caractérisé en ce que** la lame de contact (12) présente une charnière (24) et/ou au moins un support à encliquetage (26A-26C).

17. Support de données portatif selon la revendication 1 sous la forme d'une carte à puce, **caractérisé en ce que** la lame de contact (12) présente au moins une nervure (22A, 22B) disposée sur le côté et rabattable à la hauteur des contacts d'interface (CA-CD) se trouvant sur la lame de contact.

18. Carte de remplissage pour une utilisation conjointe avec un support de données selon la revendication 1 sous la forme d'une carte à puce, **caractérisée en ce qu'**elle présente une lame (12A) correspondant à la lame de contact (12) de la carte à puce, qui peut être pliée vers l'extérieur ou escamotée à partir du plan de la carte à puce conjointement avec la lame de contact (12) de la carte à puce et peut-être repliée ou rabattue à nouveau dans le plan de la carte à puce.

19. Support de données portatif selon la revendication 1 sous la forme d'une carte à puce, **caractérisé en ce que** la carte à puce présente au moins une puce à semi-conducteur, qui est aménagée pour l'échange de données aussi bien par la première que par la seconde interface.
